# EUROPÄISCHE PATENTSCHRIFT

(11) **EP 2 412 084 B1**
(45) Veröffentlichungstag und Bekanntmachung des Hinweises auf die Patenterteilung: **14.10.2015**
(21) Anmeldenummer: 10708981.5
(22) Anmeldetag: 12.03.2010
(51) Int. Cl.: H02K 15/02, H02K 1/24

(54) **KLAUENPOL MIT ZENTRIERPUNKT**
CLAW POLE COMPRISING A CENTRING POINT
PÔLE À GRIFFES AVEC POINT DE CENTRAGE

(30) Priorität: 23.03.2009 DE 102009001745
(43) Veröffentlichungstag der Anmeldung: 01.02.2012
(73) Patentinhaber: Robert Bosch GmbH, 70442 Stuttgart (DE)
(72) Erfinder: ECKERT, Rolf, 71277 Rutesheim (DE); FEES, Horst, 74321 Bietigheim-Bissingen (DE)
(86) Internationale Anmeldenummer: PCT/EP2010/053207
(87) Internationale Veröffentlichungsnummer: WO 2010/108797

(56) Entgegenhaltungen:
- FR-A1- 2 789 240
- US-A- 5 539 265
- US-A1- 2004 124 723

## Beschreibung

### Stand der Technik

EP 0 783 790 B1 bezieht sich auf eine Rotoranordnung für eine elektrische Maschine. Es ist ein Rotor für eine elektrische Maschine offenbart, der einen Spulenkern umfasst, mit einem Mittelpunkt, wobei durch den Mittelpunkt eine Drehachse verläuft. Der Rotor umfasst radial nach außen abstehende erste und zweite Wände sowie einen zwischen den ersten und zweiten Wänden um einen Spulenkern gewickelten Draht, welcher die Wicklung darstellt. Dieser umfasst mindestens einen Lappen, der radial vom Mittelpunkt weisend von der ersten Wand des Spulenkerns absteht, wobei jeder Lappen im zusammengebauten Rotor auf die Feldwicklung herabgebogen ausgebildet ist. In das radialäußere Ende eines jeden Lappens ist eine Einkerbung eingeformt.

US 5,229,672 zeigt eine elektrische Maschine, die als Generator ausgebildet ist und die einen Rotor aufweist. Die elektrische Maschine ist als Klauenpolgenerator ausgebildet, wobei die Klauenpole zweier Klauenpolplatinen ineinander greifen. Zum Auswuchten sind am Rotor in Umfangsrichtung verteilt voneinander angeordnet Kerben bzw. Bohrungen vorgesehen, mit welchen der Generator nach Fertigstellung ausgewuchtet wird.

FR 2 789 240 A1 bezieht sich auf einen Generator für Anwendungen in Kraftfahrzeugen. Bei diesem Generator handelt es sich ebenfalls um einen Klauenpolgenerator, bei dem einzelne an Klauenpolplatinen ausgebildete Klauenpole ineinander greifen. Im Bereich der Klauenpolwurzeln, die einen Übergang von einem Tellerteil der Klauenpolplatine zu den von dieser um 90° gebogen orientierten einzelnen Klauenpole darstellen, befindet sich eine Fase, in der senkrecht zur Oberfläche dieser Fase eine Wuchtbohrung vorgesehen werden kann.

Beim Feinwuchten von Komponenten einer elektrischen Maschine, so zum Beispiel eines Generator zur Anwendung in Kraftfahrzeuganwendungen, muss der Läufer ausgewuchtet werden. Dies geschieht bevorzugt an den kalt umgeformten Klauenpolen im Bereich der Klauenpolwurzeln am Rückenradius durch Anbringen von Feinwuchtbohrungen. Die Feinwuchtbohrungen stellen einen örtlich konzentrierten Materialabtrag dar, wodurch der Läufer des Generators, insbesondere eines Klauenpolgenerators, nach der Montage gewuchtet werden kann. Ein Feinwuchten des Läufers dieser Ausführungsform von elektrischen Maschinen ist deshalb so bedeutsam, da der Läufer in Klauenpolgeneratoren mit Drehzahlen in der Größenordnung von 18000 min⁻¹ und höher rotiert. Je exakter die Auswuchtbohrungen, d.h. die Feinwuchtbohrungen angebracht werden können, ein desto ruhigerer Lauf der elektrischen Maschine lässt sich erzielen. Darüber hinaus kann durch äußerst exaktes Auswuchten des Läufers des Klauenpolgenerators eine sehr lange Lebensdauer der Wälzlager erreicht werden, mit denen der Läufer im Gehäuse, d.h. dem Statorteil des Klauenpolgenerators gelagert ist.

Das Anbringen von Feinwuchtbohrungen im Bereich der Klauenpolwurzel am Rückenradius führt oftmals zum Verlaufen des Bohrers, da auf dem Scheitelpunkt des Radius der Klauenpolwurzel gebohrt wird, um exakt an dieser Stelle einen Materialabtrag zu erzeugen. Dies kann zur Beschädigung des bereits auf der Welle des Läufers montierten Lüfters oder zum Brechen der Bohrer führen.

### Darstellung der Erfindung

Der Erfindung liegt die Aufgabe zugrunde, am Läufer einer mit hohen Drehzahl betriebenen elektrischen Maschinen das Herstellen von Wuchtbohrungen zu vereinfachen.

Der erfindungsgemäß vorgeschlagenen Lösung folgend, wird bevorzugt am Rückradius der Klauenpolwurzel ein Zentrum angebracht, welches einerseits ein Verlaufen des Bohrers verhindert und andererseits eine größere Flexibilität in der Fertigung hinsichtlich steilerer Anbohrwinkel ermöglicht. Dieses Zentrum kann zum Beispiel bei der Fertigung des Klauenpols bzw. der Klauenpolplatine am Rückenradius der Klauenpolwurzel als Vertiefung, so zum Beispiel in Form einer Zentrierspitze, in Kugelform oder in verschiedenen anderen Geometrien zum Beispiel als Vierkanttrichter oder dergleichen ausgeführt werden. Diese Vertiefung, die am Rückenradius der Klauenpolplatine gefertigt wird, stellt zum einen eine präzise Lage der Feinwuchtbohrung sicher und andererseits wird die Beschädigung eines bereits auf dem vormontierten Läufer befestigten Lüfters vermieden, da das Verlaufen des Bohrers nun ausgeschlossen ist. Der mit einem Zentrum versehene Rückenradius der Klauenpolwurzel ermöglicht steilere Anbohrwinkel, was hinsichtlich des Ortes des Materialabtrages zur Auswuchtung des Läufers einerseits eine größere Flexibilität ermöglicht, andererseits die Montage erleichtert und nicht zuletzt die Qualität der Feinwuchtung entscheidend verbessern kann.

Das erfindungsgemäß vorgeschlagene Einbringen des Zentrums zum Ansatz des spanabhebenden Bohrers kann entlang der gesamten Länge des Rückenradius' der Klauenpolwurzel erfolgen.

### Kurze Beschreibung der Zeichnungen

Anhand der Zeichnung wird die Erfindung nachstehend ergehender beschrieben.

Es zeigt:
- Figur 1: einen Querschnitt durch eine elektrische Maschine, die als Klauenpolgenerator ausgebildet ist,
- Figur 2: eine schematische Darstellung eines Klauenpols mit Klauenpolfingern, Zentrum und Feinwuchtbohrung, und
- Figur 3: eine Draufsicht auf einen der Klauenpolfinger der Klauenpolplatine gemäß Figur 2.

### Ausführungsformen

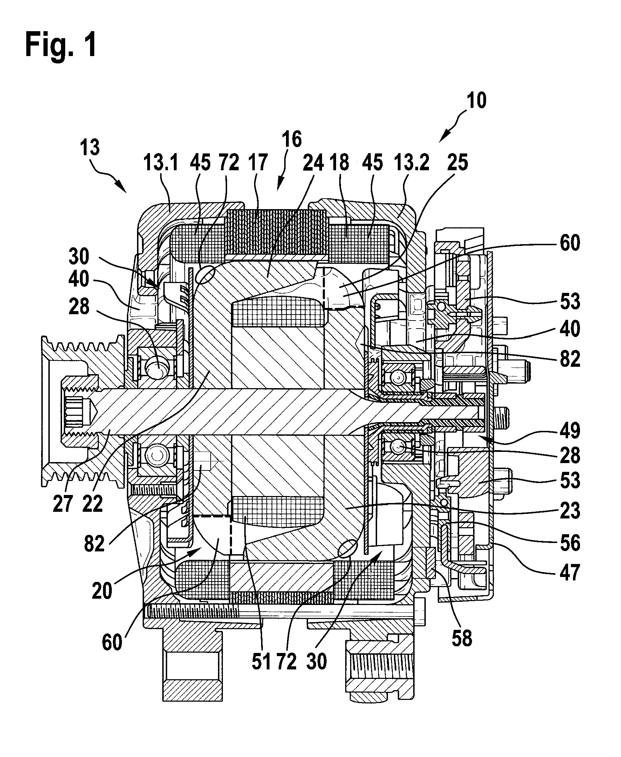

Figur 1 ist ein Querschnitt durch eine elektrische Maschine 10, hier in der Ausführung als Generator für Kraftfahrzeuge zu entnehmen.

Diese elektrische Maschine 10 weist unter anderem ein zweiteiliges Gehäuse 13 auf, dass aus einem ersten Lagerschild 13.1 und einem zweiten Lagerschild 13.2 besteht. Das Lagerschild 13.1 und das Lagerschild 13.2 nehmen in sich einen Stator 16 auf, der einerseits aus einem im Wesentlichen kreisringförmigen Ständereisen 17 besteht und in dessen radial nach innen gerichtete, sich axial erstreckende Nuten, eine Ständerwicklung 18 eingelegt ist.

Der ringförmig ausgebildete Stator 16 umgibt mit seiner radial nach innen gerichteten genuteten Oberfläche einen Rotor 20, der als Klauenpolläufer ausgebildet ist. Der Rotor 20 umfasst unter anderem zwei Klauenpole 22 und 23, an deren Außenumfang jeweils sich in axiale Richtung erstreckende Klauenpolfinger 24 und 25 angeordnet sind. Beide Klauenpole 22 und 23 sind im Rotor 20 derart angeordnet, dass deren sich in axialer Richtung erstreckende Klauenpolfinger 24 bzw. 25 am Umfang des Rotors 20 einander abwechseln. Es ergeben sich dadurch magnetisch erforderliche Zwischenräume zwischen den gegensinnig magnetisierten Klauenpolfingern 24 und 25, die als Klauenpolzwischenräume bezeichnet werden. Der Rotor 20 ist mittels einer Welle 27 und je einem auf je einer Rotorseite befindlichen Wälzlager 28 in den jeweiligen Lagerschilden 13.1 bzw.13.2 des Gehäuses 13 drehbar gelagert.

Der Rotor 20 weist insgesamt zwei axiale Stirnflächen auf, an denen jeweils ein Lüfter 30 befestigt ist. Dieser Lüfter 30 besteht im Wesentlichen aus einem plattenförmigen bzw. scheibenförmigen Abschnitt, von dem Lüfterschaufeln in bekannter Weise ausgehen. Diese Lüfter 30 dienen dazu, über Öffnungen 40 in den Lagerschilden 13.1 und 13.2 einen Luftaustausch zwischen der Außenseite der elektrischen Maschine 10 und dem Innenraum der elektrischen Maschine 10 zu ermöglichen. Dazu sind die Öffnungen 40 im Wesentlichen an den axialen Enden der Lagerschilde 13.1 und 13.2 vorgesehen, über die mittels der Lüfter 30 Kühlluft in den Innenraum der elektrischen Maschine 10 eingesaugt wird. Diese Kühlluft wird durch die Rotation der Lüfter 30 nach radial außen beschleunigt, so dass diese durch den kühlluftdurchlässigen Wicklungsüberhang 45 hindurchtritt. Durch diesen Effekt wird der Wicklungsüberhang 45 gekühlt. Die Kühlluft nimmt nach dem Hindurchtreten durch den Wicklungsüberhang 45 bzw. nach dem Umströmen dieses Wicklungsüberhangs 45 einen Weg radial nach außen, durch hier in Figur 1 nicht dargestellte Öffnungen.

In Figur 1 auf der rechten Seite befindet sich eine Schutzkappe 47, die verschiedene Bauteile vor Umgebungseinflüssen schützt. So deckt die Schutzkappe 47 beispielsweise eine Schleifringbaugruppe 49 ab, die dazu dient, eine Erregerwicklung 51 mit Erregerstrom zu versorgen. Um diese Schleifringbaugruppe 49 herum ist ein Kühlkörper 53 angeordnet, der hier als Pluskühlkörper wirkt. Als Minuskühlkörper wirkt das Lagerschild 13.2. Zwischen dem Lagerschild 13.2 und dem Kühlkörper 53 befindet sich eine Anschlussplatte 56, die dazu dient, im Lagerschild 13.2 angeordnete Minusdioden 58 und hier in der Darstellung gemäß Figur 1 nicht dargestellt Plusdioden im Kühlkörper 53 miteinander zu verbinden und somit eine an sich bekannte Brückenschaltung zu bilden.

Die Montage des Rotors 20 erfolgt wie nachfolgend dargestellt: Zunächst wird die Welle 27 bereitgestellt. Im Anschluss daran wird der Polkern ebenso wie die Klauenpole 22 und 23 auf die Welle 27 aufgeschoben. Das derart vormontierte Bauteil aus Welle 27, Polkern und Klauenpole 22, 23 umfassend, wird in einem ersten Schritt vorgewuchtet. Dazu dienen in Figur 1 dargestellte Vorwuchtbohrungen 82, die im Wesentlichen an einer Außenseite 70 innerhalb des Trägerteiles 66 der Klauenpole 22 und 23 des Rotors 20 eingebracht sind. Im Anschluss daran werden an den beiden Stirnseiten der Klauenpole 22 und 23 die Lüfter 30 montiert und befestigt. Das Befestigen der Lüfter 30 an den Stirnseiten der Klauenpole 22, 23 kann zum Beispiel im Wege des Punktschweißens erfolgen. In Zusammenhang mit diesem Arbeitsschritt werden die Schleifringe bzw. die Schleifringbaugruppe 49 ebenfalls befestigt.

Aus der Darstellung gemäß Figur 1 geht hervor, dass bedingt durch den Lüfter 30 ein Einbringen von Weinwuchtbohrungen im Bereich eines Rückenradius' 72 der Klauenpolwurzel 60 nur schwierig zu bewerkstelligen ist.

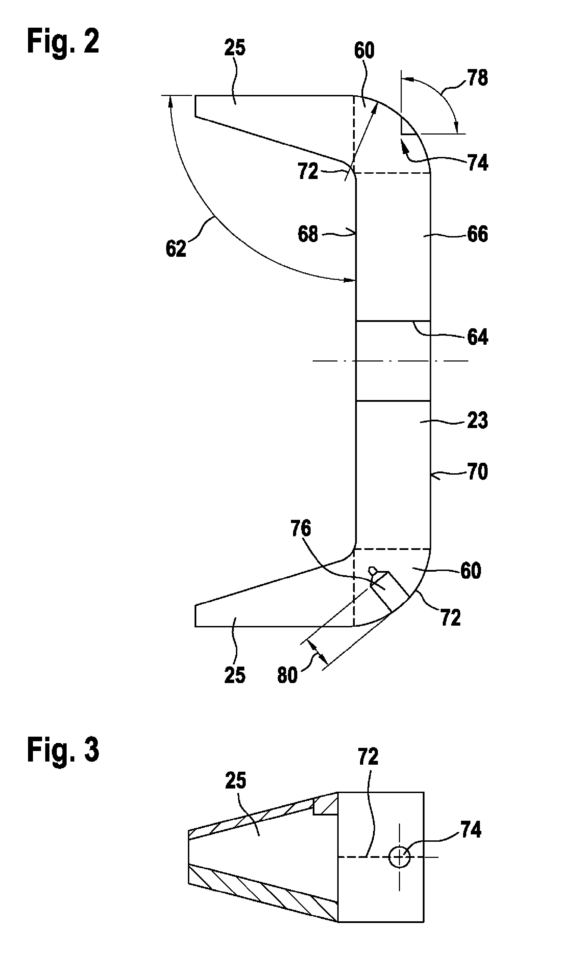

Im vorliegenden Zusammenhang wird unter Klauenpolwurzel 60 derjenige Bereich eines Klauenpols 22 bzw. 23 verstanden, an dem die sich im Wesentlichen in axiale Richtung erstreckenden Klauenpolfinger 24, 25 an einer Innenseite der Klauenpole 22 bzw. 23 entspringen. Die Klauenpolwurzel 60 charakterisiert den Übergangsbereich, innerhalb dessen eine 90° Orientierung 62 (vgl. Darstellung gemäß Figur 2) vorliegt, um die die Klauenpolfinger 24, 25 von einem im Wesentlichen tellerförmig ausgebildeten Trägerteil des Klauenpols 22, 23 abgewinkelt, ausgeführt sind.

Aus der Darstellung gemäß Figur 2 geht dieser Bereich, der durch Bezugszeichen 60 bezeichnet ist, deutlicher hervor. Die Klauenpolwurzel 60 ist derjenige Bereich, der den Übergang zwischen dem in Figur 2 dargestellten Trägerteil 66 und den einzelnen Klauenpolfingern 25, die über eine Innenseite 68 des Klauenpols 23 hervorstehen, bildet. Diese Klauenpolwurzel 60 ist durch einen Rückenradius 72 definiert. Auf diesem Rückenradius 72 wird, wie erfindungsgemäß vorgeschlagen, eine Zentrierung 74 für ein spanabhebendes Werkzeug, bei dem es sich im Allgemeinen um einen Bohrer handelt, angebracht. Die Zentrierung 74 kann auf einer beliebigen Position entlang des Rückenradius' 72 liegen. Die Zentrierung 74 kann als Vertiefung, als Kalotte, als Zentrierspitze oder auch in Kugelform ausgebildet sein. Entsprechend des Öffnungsgrades einer zum Beispiel trichterförmig ausgebildeten Vertiefung, die als Zentrierung dient, ergibt sich ein dazu korrespondierender Anbohrwinkelbereich 78 für das spanabhebende Werkzeug, insbesondere einem Bohrer. Die erfindungsgemäß vorgeschlagene Lösung gestattet aufgrund des größeren Anbohrwinkelbereiches 78, eine in Figur 2 ebenfalls dargestellte Feinwuchtbohrung 76 hinsichtlich des Eintrittswinkels in die Klauenpolwurzel 60 in optimaler Weise zu platzieren. Für die exakte Auswuchtung des Rotors 20, der einen ersten Klauenpol 22 und einen zweiten Klauenpol 23 gemäß der Darstellung in Figur 1 umfasst, ist es bedeutsam, dass nicht nur die Position der Feinwuchtbohrung 76 auf dem Rückenradius 72, sondern auch deren Verlauf in das Material des Klauenpols 23 beeinflusst werden kann, so dass ein dem idealen Wuchtergebnis nahe kommendes Auswuchten der Klauenpole 22 bzw. 23 erreicht werden kann. Durch die erfindungsgemäß vorgeschlagene Zentrierung, die an einer beliebigen Stelle entlang des Rückradius 72 positionierbar ist wird einerseits erreicht, dass das spanabhebende Werkzeug, im Allgemeinen an Bohrer nicht verläuft und andererseits werden wie in Zusammenhang mit Figur 1 bereits erläutert, eine Beschädigung der Lüfter 30 bzw. von deren Schaufeln bei der Herstellung der Wuchtbohrung 76 im Bereich der Klauenpolwurzel 60 vermieden.

Aus der Darstellung gemäß Figur 2 geht des Weiteren hervor, dass eine Tiefe der Feinwuchtbohrung 76 auf dem Rückenradius 72 der Klauenpolwurzel 60 durch Bezugszeichen 80 gekennzeichnet ist. Die Tiefe 80 der Feinwuchtbohrung 76 bestimmt die Größe des entstehenden Materialabtrages und ist abhängig von dem Grad der Feinwuchtung, die an der jeweiligen vormontierten Baugruppe, die Welle 27, den Polkern sowie zumindest die beiden Klauenpole 22, 23 umfassend, erforderlich ist um ein qualitativ vorstehendes Wuchtergebnis zu gewährleisten.

Aus der Darstellung gemäß Figur 2 geht hervor, dass eine Öffnung 64, - im Allgemeinen handelt es sich dabei um eine Bohrung - symmetrisch in dem Klauenpol 23 ausgebildet ist. Durch diese Öffnung 64 erstreckt sich die Welle 27, vgl. Darstellung gemäß Figur 1, die neben dem weiteren Klauenpol 22 auch den Polkern sowie die Schleifringbaugruppe, vgl. Bezugszeichen 49, aufnimmt.

In der Darstellung gemäß Figur 2 ist eine Innenseite des Klauenpols 23 mit Bezugszeichen 68 bezeichnet, von der aus sich die Klauenpolfinger 25 in axiale Richtung parallel zur Symmetrieachse des Klauenpols 23 erstrecken. An einer Außenseite 70 des Klauenpols 23 gemäß der Darstellung in Figur 2, wird der in Figur 1 dargestellte Lüfter 30 montiert, der in der Darstellung gemäß Figur 2 fortgelassen wurde.

Aus der Darstellung gemäß Figur 2 ergibt sich, dass die Klauenpolwurzeln 60 zwischen dem Trägerteil 66 des Klauenpols 23 und den einzelnen Klauenpolfingern 25 mit zumindest einen Winkelbereich zwischen 90° und 120° überstreichen. In diesem Bereich der Klauenpolwurzeln entsteht der Rückenradius 72, an dem die Zentrierung 74 ab beliebiger Stelle in axiale Richtung gesehen, positionierbar ist, je nach Erfordernissen.

Der Darstellung gemäß Figur 3 schließlich ist eine Draufsicht auf die Zentrierung 74 am Rückenradius 72 der Klauenpolwurzel 60 zu entnehmen. Aus der Draufsicht gemäß Figur 3 geht hervor, dass die dort dargestellte Zentrierung 74 leicht zum Mittelpunkt des Rückenradius 72 verschoben, positioniert ist.

## Patentansprüche

1. Elektrische Maschine (10), insbesondere Drehstromgenerator für Fahrzeuge, mit einem Stator (16) und einem Rotor (20), der einen ersten und einen zweiten Klauenpol (22, 23) umfasst, von der sich ausgehend von Klauenpolwurzeln (60) jeweils Klauenpolfinger (24, 25) in axiale Richtung erstrecken, **dadurch gekennzeichnet, dass** an einem Rückenradius (72) der Klauenpolwurzeln (60) eine Zentrierung (74) für ein Werkzeug ausgeführt ist.

2. Elektrische Maschine (10) gemäß Anspruch 1, **dadurch gekennzeichnet, dass** die Zentrierung (74) entlang des Rückenradius' (72) positioniert ist.

3. Elektrische Maschine (10) gemäß Anspruch 1, **dadurch gekennzeichnet, dass** die Zentrierung (74) als Zentrierspitze ausgebildet ist.

4. Elektrische Maschine (10) gemäß Anspruch 1, **dadurch gekennzeichnet, dass** die Zentrierung (74) in Kugelform ausgeführt ist.

5. Elektrische Maschine (10) gemäß Anspruch 1, **dadurch gekennzeichnet, dass** die Zentrierung (74) einen zu ihrem Öffnungswinkel korrespondierenden Anbohrwinkelbereich (78) definiert.

6. Elektrische Maschine (10) gemäß Anspruch 2, **dadurch gekennzeichnet, dass** die Zentrierung (74) auf dem Rückenradius (72) innerhalb der Klauenpolwurzel (60) liegt.

## Claims

1. Electric machine (10), in particular three-phase current generator for vehicles, having a stator (16) and a rotor (20) which comprises a first and a second claw pole (22, 23), from which in each case claw pole fingers (24, 25) extend in the axial direction from claw pole roots (60), **characterized in that** a centering means (74) for a tool is formed on a back radius (72) of the claw pole roots (60).

2. Electric machine (10) according to Claim 1, **characterized in that** the centering means (74) is positioned along the back radius (72).

3. Electric machine (10) according to Claim 1, **characterized in that** the centering means (74) is embodied as a centering point.

4. Electric machine (10) according to Claim 1, **characterized in that** the centering means (74) is embodied in the form of a sphere.

5. Electric machine (10) according to Claim 1, **characterized in that** the centering means (74) defines a drilling angle range (78) which corresponds to an angle of aperture.

6. Electric machine (10) according to Claim 2, **characterized in that** the centering means (74) is located on the back radius (72) within the claw pole roots (60).

## Revendications

1. Machine électrique (10), en particulier alternateur triphasé pour véhicules, comprenant un stator (16) et un rotor (20) qui comprend un premier et un deuxième pôle à griffes (22, 23), depuis lesquels à chaque fois des doigts de pôle à griffes (24, 25) s'étendent à partir des embases des pôles à griffes (60) dans la direction axiale, **caractérisée en ce qu'**un centrage (74) pour un outil est réalisé au niveau d'un rayon de dos (72) des embases des pôles à griffes (60).

2. Machine électrique (10) selon la revendication 1, **caractérisée en ce que** le centrage (74) est positionné le long du rayon de dos (72).

3. Machine électrique (10) selon la revendication 1, **caractérisée en ce que** le centrage (74) est réalisé sous forme de pointe de centrage.

4. Machine électrique (10) selon la revendication 1, **caractérisée en ce que** le centrage (74) est réalisé sous forme sphérique.

5. Machine électrique (10) selon la revendication 1, **caractérisée en ce que** le centrage (74) définit une région coudée de perçage (78) correspondant à son angle d'ouverture.

6. Machine électrique (10) selon la revendication 2, **caractérisée en ce que** le centrage (74) est situé sur le rayon de dos (72) à l'intérieur de l'embase de pôle à griffes (60).
